# FASCICULE DE BREVET EUROPEEN

(11) **EP 2 079 148 B1**
(45) Date de publication et mention de la délivrance du brevet: **26.08.2020**
(21) Numéro de dépôt: 09150314.4
(22) Date de dépôt: 09.01.2009
(51) Int. Cl.: H02J 7/34, H02J 7/35, H02J 1/06, B60L 50/16, B60L 50/40, B60R 16/033

(54) **Circuit electrique**
Elektrischer Schaltkreis
Electric circuit

(30) Priorité: 09.01.2008 FR 0850099
(43) Date de publication de la demande: 15.07.2009
(73) Titulaire: PSA Automobiles SA, 78300 Poissy (FR)
(72) Inventeur: Rolland, Guillaume, 78380 Bougival (FR)
(74) Mandataire: Ménès, Catherine

(56) Documents cités:
- EP-A- 1 403 143
- EP-A- 1 811 629
- DE-U1-202006 010 093
- FR-A- 2 853 154
- US-A- 4 175 249
- US-A- 5 779 817
- US-A1- 2003 184 314
- US-A1- 2004 126 635
- US-A1- 2007 090 808

## Description

### Domaine technique

La présente invention concerne les circuits électriques, notamment les circuits de véhicules automobiles, comportant une pluralité des éléments de stockage électrique, notamment des éléments de stockage d'énergie du type batteries ou du type supercondensateurs - ces derniers étant également connus sous le terme de super- ou ultra-capacités ou encore UCAP- destinés tout particulièrement aux applications de forte puissance.

Ces applications sont par exemple dans le domaine des transports (véhicules hybrides, tramways, bus, etc.), de l'alimentation électrique (éoliennes) ou encore plus généralement dans des domaines où des pointes de consommation électriques peuvent nécessiter de supplémenter l'énergie fournie par une batterie ou un réseau. La présente invention concerne plus particulièrement la charge et la décharge de tels éléments.

### Etat de la technique antérieure

On constate une très probable généralisation des d'alterno-démarreurs sur les véhicules automobiles, cette solution technologique consiste en une machine électrique capable de jouer le rôle d'un démarreur, et donc d'entrainer le moteur thermique en utilisant une source électrique, comme par exemple une batterie, ou en dehors des phases de démarrage de générer un courant électrique. La puissance de telles machines électriques est de plus en plus importante, et permet d'entrainer le véhicule sur de plus longues durées et plus souvent. Cette configuration se rencontre notamment sur les véhicules dits « hybrides », pour lesquels la machine électrique prend le relais sur une durée courte pour booster la puissance du moteur thermique à bas régime ou sur une durée plus longue en apportant une assistance électrique. Elle se rencontre également sur des véhicules du type « Stop and Start » pour lesquels le moteur thermique s'arrête dès que le véhicule est à basse vitesse ou à l'arrêt et redémarre, par exemple, sur volonté conducteur.

Avec de telles machines électriques de fortes puissances, une simple batterie conventionnelle est souvent insuffisante pour fournir et stocker l'énergie électrique nécessaire. C'est pourquoi il a été proposé de prévoir une source de stockage d'énergie complémentaire comme par exemple une source de stockage basée sur des supercondensateurs.

La technologie de stockage d'énergie par des supercondensateurs repose sur le principe de fonctionnement des condensateurs classiques, et offre ainsi des performances en densités d'énergie relativement faibles mais avec des capacités en puissance fortes. Ces supercondensateurs s'apparent ainsi fonctionnellement aux batteries électrochimiques qui équipent notamment les véhicules automobiles. Les supercondensateurs supportent un nombre de cycles de charge et de décharge très supérieur à celui des batteries conventionnelles, les spécialisant dans les applications requérant des sources de puissance élevée sur des temps courts. La spécificité d'une supercapacité est d'être un système d'accumulation de charges électriques, avec comme pour tout condensateur, la quantité de charge électrostatique Q reliée à la tension U par l'équation Q = CU²/2.

Du fait d'une technologie de construction par enroulement de films minces, la tension unitaire maximum d'une UCAP est aujourd'hui limitée à environ 2,7 Volts.

Pour tirer profit des avantages de ce type d'éléments de stockage, il est connu des architectures générales avec un circuit consommateur, pouvant être un réseau de bord, à un potentiel Ur, une machine électrique connectée en parallèle avec un groupe de supercondensateurs, cet ensemble formant un réseau dit flottant à une tension supérieure à la tension de la batterie. La batterie est connectée au réseau de bord régulé et le réseau flottant et le réseau régulé sont connectés par l'intermédiaire d'un convertisseur DC/DC permettant de fournir une tension régulée à l'ensemble batterie plus réseau de bord. Certaines architectures ont un convertisseur DC/DC réversible permettant d'élever la tension du réseau régulé vers le réseau flottant. Ce type d'architecture est couteuse et peu flexible car la puissance et le type de convertisseur DC/DC doivent être adaptées en fonction des types de consommateurs sur les deux réseaux.

Par ailleurs, il est connu du brevet FR2853154 un système d'alimentation en énergie électrique d'organe consommateurs embarqués à bord d'un véhicule automobile comportant des moyens formant générateur d'énergie électrique dont la sortie est raccordée par un réseau électrique à des premiers moyens de stockage d'énergie électrique - tels par exemple une batterie électrochimique - et à un premier organe consommateur. Un second organe consommateur est raccordé au réseau électrique à travers des moyens formant source d'énergie auxiliaire, tels que par exemple un condensateur, et des moyens de commutation dont le fonctionnement est piloté par des moyens de commande pour permettre une charge des seconds moyens de stockage à partir du reste du système et un raccordement de ceux-ci en s'rie avec le second organe consommateur pour assurer son alimentation lors de son activation. Un tel dispositif permet d'augmenter la tension aux bornes du second consommateur lors de son activation, et donc permet d'atténuer les chutes de tension associées à la mise en route d'organes gros consommateurs d'énergie, sans pour autant sur-dimensionner les moyens de génération et de stockage de l'énergie. Ce dispositif ne permet pas d'augmenter la tension disponible pour la machine électrique et n'est pas prévu pour réguler une tension avec ou sans batterie.

### Brève description de l'invention

La présente invention a ainsi pour but une architecture de réseau permettant de fonctionner à différents niveaux de tension sans convertisseurs de tension DC/DC.

Selon l'invention ce but est atteint par un circuit électrique comportant
- un réseau de bord alimentant des organes consommateurs,
- un moyen générateur d'énergie électrique relié au réseau de bord, et,
- au moins un moyen de stockage électrique dit commutable pour stocker de l'énergie du générateur, le moyen de stockage comportant des éléments de stockage aptes à fournir une tension variable, lesdits éléments étant capables d'être commutés successivement de sorte que le moyen de stockage électrique peut fournir une tension régulée au réseau de bord.

De plus, selon l'invention, les éléments de stockage du moyen de stockage électrique commutable comportent une série de n éléments de stockage électrique montés sur des lignes électriques connectées en parallèles entre elles et comportant chacune un commutateur de ligne, lesdites n lignes électriques connectées en parallèle étant reliées et mises en commun pour être reliés en série à un moyen de stockage apte à fournir une tension fixe et relié au réseau de bord.

Eventuellement, le moyen de stockage apte à fournir une tension fixe est une batterie et le circuit peut également comporter une branche de raccordement de la batterie munie d'un commutateur de raccordement de la batterie pour alimenter le réseau de bord uniquement par le moyen de stockage apte à fournir une tension fixe.

Par moyen de stockage électrique commutable comportant des éléments aptes à fournir une tension variable, on entend au sens de l'invention des éléments capables de fournir différents niveaux de tension dans un fonctionnement nominal, comme par exemple des condensateurs ou des Ucap, montés en série ou en parallèle. La commutation de ces éléments, en série et/ou en parallèle, ou un mix batterie/Ucaps, permet en plus de fournir une tension régulée proche d'une tension de consigne, tension de consigne qui peut être d'un niveau fixe (tel que nécessaire par exemple pour l'alimentation des consommateurs du réseau de bord) ou variable (notamment tel que nécessité pour alimenter un démarreur de forte puissance). Une batterie électrochimique est par contre considérée comme un moyen de fourniture d'une tension fixe, même si de manière transitoire, le réseau de bord raccordé à la batterie peut fluctuer lors des fortes demandes de courant.

Par machine électrique il est tout particulièrement entendu un alterno-démarreur, notamment un alterno-démarreur conçu pour redémarrer fréquemment un moteur thermique équipant un véhicule muni d'un système dit stop-and-start, qui provoque l'arrêt du moteur dès que le véhicule est à faible vitesse ou à l'arrêt, par exemple pour respecter un feu d'intersection, et le redémarrage du moteur en réponse à une demande conducteur, comme un simple pression sur la pédale d'accélérateur. Cet alterno-démarreur peut également être conçu pour entrainer le véhicule pendant des périodes courtes ou prolongées comme dans le cas des véhicules hybrides. Pour de telles applications, la machine électrique peut typiquement être conçue pour opérer sous une tension comprise entre la tension 12,5V et typiquement 200V. Des fonctionnements à tension plus élevées sont envisageables.

Le circuit électrique peut également comporter des moyens de stockage électrique aptes à fournir une tension fixe comme par exemple une batterie électrochimique ou plus généralement tout moyen approprié pour fournir une tension constante pendant une période relativement longue, en particulier une batterie électrochimique conventionnelle dite 12 V d'un véhicule. Bien entendu, la batterie peut également être plus puissante, ou fonctionner à tension plus élevée, comme par exemple du type, 45V-110V ou plus, même s'il faut souligner que l'invention permet avantageusement de ne pas sur-dimensionner les batteries, tout en étant capable de fournir l'énergie requise par une machine électrique qui doit être alimenté avec une tension bien supérieure à la tension fournie par la batterie, par exemple comprise entre 12,5 et 45V.

Par la suite, par souci de simplicité et par référence à l'application automobile pour laquelle le circuit selon l'invention est tout particulièrement bien adapté, il sera normalement fait simplement référence à une batterie pour désigner un moyen de stockage électrique apte à fournir une tension fixe, et les éléments associés seront également qualifiés d'éléments batterie, comme par exemple la branche-batterie pour la branche du circuit comportant le moyen de stockage électrique apte à fournir une tension fixe.

L'architecture proposée selon l'invention permet d'utiliser l'énergie électrique que peut fournir le groupe de supercondensateurs et/ou la batterie optionnelle sans avoir à convertir la tension, éventuellement très élevée, que peut fournir ce groupe de condensateurs ou supercondensateurs, donc en se passant d'un convertisseur DC/DC.

Dans une variante plus particulièrement préférée de l'invention, le circuit est muni d'un interrupteur piloté qui permet d'isoler d'une part les branches du circuit portant la machine électrique et le premier moyen de stockage d'énergie, et d'autre part le second moyen de stockage d'énergie qui peut alors alimenter de façon isolée le reste des moyens consommateurs. Cet interrupteur piloté permet des phases de vies du circuit dans lequel la machine électrique est alimentée sous une tension supérieure à la tension maxi du réseau de bord et/ou de la batterie.

Dans une variante, il peut également être prévu un interrupteur pour isoler du reste du circuit l'ensemble constitué par les consommateurs du réseau de bord, le moyen de stockage apte à fournir une tension fixe et la branche de raccordement de la batterie

Le moyen de stockage électrique commutable peut avantageusement comporter un ensemble de cellules commutées obtenu par la mise en série et/ou en parallèle des lignes de puissance d'au moins deux cellules élémentaires, chaque cellule élémentaire comportant
- une ligne de puissance reliant deux bornes de connexion ;
- une unité de stockage électrique, reliée aux bornes de la ligne de puissance par l'intermédiaire d'au moins un commutateur cellulaire pour placer l'unité de stockage en série ou déconnectée (BP) de la ligne de puissance et ;
- une ligne de commande pour commander le ou les commutateurs cellulaires.

Le moyen de stockage électrique apte à fournir une tension variable peut comporter au moins un condensateur ou au moins un supercondensateur ou une pluralité de condensateurs/supercondensateurs montés en série.

Le réseau de bord peut être un réseau d'un véhicule automobile, ce véhicule pouvant être un véhicule automobile équipé d'une fonction stop-and-start.

### Brève description des figures

D'autres avantages et particularités de l'invention ressortent de la description de modes de réalisation faite ci-après en référence aux dessins annexés dans lesquels :
La figure 1 illustre une architecture où plusieurs éléments de stockages additionnels à la batterie sont commutables en série avec la batterie.
La figure 2 illustre un autre exemple d'architecture conforme au principe général de l'invention avec un ensemble d'éléments de stockage électrique commutables, montés en parallèle avec une batterie. Cet exemple ne fait pas partie de l'invention mais est utile à sa compréhension.
La figure 3 montre une cellule élémentaire constituée d'une unité de stockage et de son système de commutation, selon la demande de brevet français 0758973, pouvant être avantageusement utilisée pour constituer un moyen de stockage électrique apte à fournir une tension régulée, comme mis en œuvre à la figure 2 et aux figures 4 à 7.
La figure 4 illustre une première architecture polyvalente qui ne fait pas partie de l'invention, permettant un fonctionnement avec la batterie en série ou en parallèle des éléments de stockage électrique commutables.
La figure 5 illustre une variante de la figure 4 dans laquelle les éléments de stockage électrique commutables sont associés à un ensemble de condensateurs associés en série. La variante illustrée à la figure 5 ne fait pas partie de l'invention.
La figure 6, sur la base de la figure 5 comporte de plus des moyens pour placer la batterie en série des différents moyens de stockage permettant de fournir une tension variable, ce qui permet une montée en tension plus importante. Sur cette figure 6 on a également figuré une solution de pré-charge des condensateurs. La solution illustrée à la figure 6 ne fait pas partie de l'invention.
La figure 7, sur la base de la variante proposée à la figure 5, illustre une autre variante mettant à profit la possibilité offerte par la commutation de connecter d'autres sources de tension comme par exemple des cellules photovoltaïques. Cet variante ne fait pas partie de l'invention.

### Exposé détaillé de modes de réalisation de l'invention

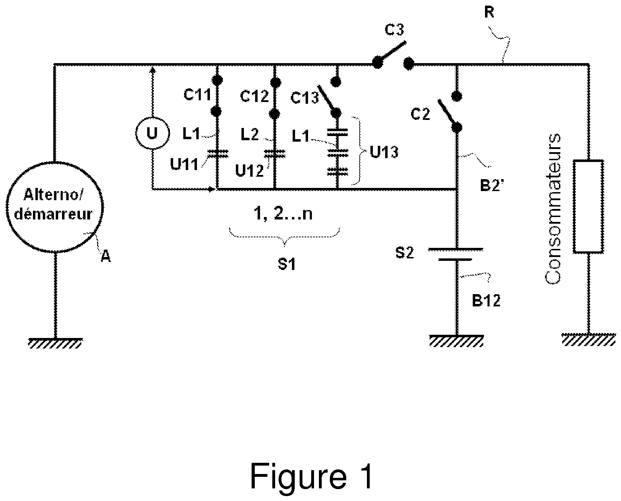

La figure 1 est un schéma illustrant une première variante de l'invention, avec un circuit électrique constituant un réseau de bord R à un potentiel Ur, de préférence régulé (les consommateurs, comme tous les éléments du circuit étant relié à une partie du réseau à un potentiel fixe ou flottant et à une masse).

Le réseau de bord alimente nombre d'organes consommateurs électriques nécessaires pour assurer des fonctions permettant le fonctionnement de tout ou partie des consommateurs du véhicule. Il va de soi que ces équipements ne sont normalement pas tous activés simultanément, mais que par ailleurs, il n'est pas souhaitable que l'activation de l'un entraine la désactivation, ou une moindre qualité de fonctionnement d'un autre.

Le circuit de la figure 1 comporte par ailleurs une machine électrique A, telle par exemple un alterno-démarreur. Cette machine électrique peut également être constituée par un simple alternateur, auquel cas un démarreur sera normalement prévu du moins pour les applications automobiles. Dans le cas d'un alterno-démarreur, cette machine électrique constitue d'une part le générateur d'énergie électrique stockée dans les moyens de stockage S1 et S2, et d'autre part un consommateur, notamment lorsque la machine électrique est utilisée pour entrainer le moteur thermique, lors des phases de démarrage notamment, ou plus longtemps si la machine est conçue pour opérer sur des durées relativement longues.

Le premier moyen de stockage S1 est un moyen de stockage commutable constitué par une série de n lignes électriques L1, L2,...Ln, montées en parallèle les unes des autres et portant chacune au moins un élément de stockage électrique U11, U12, ... U1n. Ces éléments de stockage électrique U11, U12, ... U1n sont typiquement des condensateurs ou des supercondensateurs. Chacune des n lignes L1, L2, Ln porte un commutateur de ligne C11, C12,... C1n. Toutes les lignes L11, L12, ... L1n sont reliées en série à un moyen de stockage apte à fournir une tension fixe, la batterie S2.

Dans la variante de réalisation illustrée sur cette figure 1, la batterie S2 peut par ailleurs être reliée directement au réseau de bord au moyen d'un commutateur de raccordement de la batterie C2 porté par une branche de raccordement de la batterie B2'. Ainsi, lorsque tous les commutateurs de lignes C11, C12, ...C1n sont ouverts, il reste possible d'alimenter le réseau de bord uniquement par la batterie S2.

Par ailleurs, le circuit comporte un interrupteur C3 qui permet d'isoler du reste du circuit l'ensemble constitué par les consommateurs du réseau de bord, la batterie S1 et sa branche de raccordement (B2'). Pour éviter les courts-circuits, dans une configuration comportant à la fois les deux commutateurs C2 et C3, leur pilotage doit être tel que si au moins un des commutateurs de ligne est fermé, alors les deux commutateurs C2 et C3 ne sont pas tous deux fermés.

Dans cette variante de l'invention, il existe un risque de fonctionnement avec des condensateurs totalement déchargés. Pour minimiser ce risque il est souhaitable de disposer de moyens de mesure de la tension aux bornes des condensateurs (soit directement soit par calcul), ce qui est schématisé à la figure 1, par un système de mesure de tension U.

Avec une telle architecture, il est possible de « booster » la machine électrique en l'alimentant sur une tension plus forte que la tension nominale de la batterie, par exemple en associant dans un premier temps les lignes L1 et L2 (seuls les commutateurs de ligne C11 et C12 étant fermés). Au fur et à mesure que les éléments U11 et U12 se déchargent, on va commuter d'autres lignes de façon à maintenir une tension régulée de sorte que cette tension plus élevée que la tension nominale peut être maintenue sur une durée relativement longue.

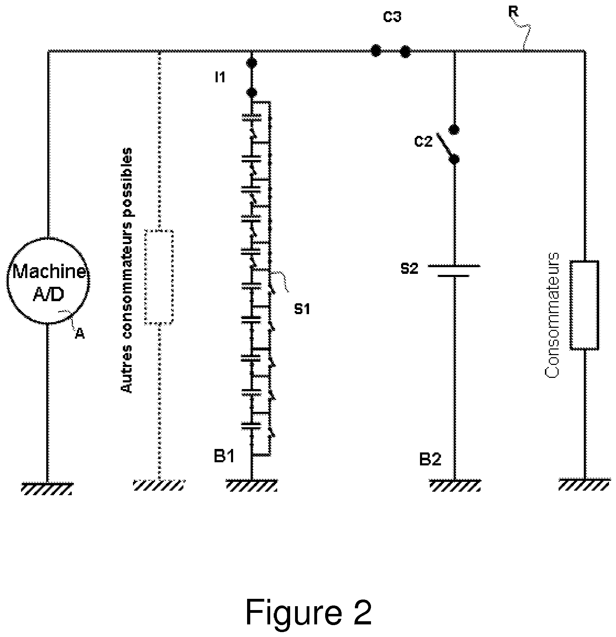

Selon une architecture qui ne fait pas partie de l'invention, la batterie S2 peut également être montée en parallèle du premier moyen de stockage S1 comme illustré à la figure 2, avec alors une simple branche-batterie B2 portant un commutateur-batterie C2. Comme dans le cas de la figure 1, l'interrupteur C3 permet de déconnecter une partie flottante ou régulée du réseau (constituée par la branche B1 et la machine électrique A) au réseau de bord. La branche B1 doit par ailleurs comporter un interrupteur I1 pour isoler S1.

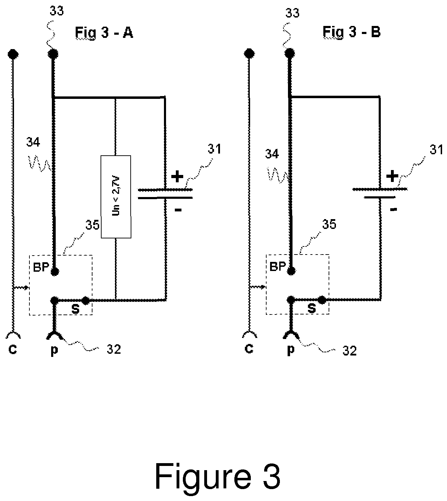

De plus dans cette nouvelle architecture, le premier moyen de stockage S1 est constitué par une association de cellules élémentaires dont un schéma de principe est proposé aux figures 3A et 3B.

Dans une autre variante de l'invention non représentée, le moyen de stockage S1 peut également comporter et une association de cellules élémentaires commutées et un ou plusieurs condensateurs (ou batteries) montés en série, eux-mêmes non commutables.

La cellule élémentaire est constituée par une unité de stockage électrique 31, montée en parallèle entre deux bornes 32, 33 d'une ligne de puissance 34, en interposant au moins un commutateur cellulaire 35.

Dans le mode de réalisation proposé sur ce schéma, le commutateur est un interrupteur à 2 positions : S et BP, la borne correspondant à la position BP étant reliée à la ligne de puissance. Ainsi, lorsque l'interrupteur est en position BP, le courant peut passer d'une borne à l'autre de la ligne de puissance mais l'unité de stockage électrique est déconnectée (position « By-pass »). La position S correspond à la mise en série de l'unité de stockage. Lorsque l'unité de stockage est constituée par une UCAP, un système de limitation de tension pourra être prévu pour limiter la tension aux bornes de cette unité de stockage. Ce limiteur de tension pouvant éventuellement également servir à équilibrer les tensions entre les différentes unités de stockage.

Dans une variante optionnelle, non représentée ici, la position BP peut être forcée de manière à isoler temporairement ou définitivement une cellule sans empêcher le fonctionnement d'un module associant plusieurs cellules.

Cette cellule élémentaire comporte de plus une ligne de commande C pour placer l'interrupteur dans l'une des 2 positions en fonction d'un ordre envoyé par la ligne de commande.

Les bornes aux extrémités d'une ligne de puissance, ici schématisées sous la forme d'une borne femelle pour le pôle négatif et d'une borne mâle pour le pôle positif permettent de monter en série des cellules. Toutes les cellules d'un même module peuvent être commandées par une ligne de commande unique, ce qui suppose différents niveaux de commande pour une reconnaissance individuelle par chaque cellule. Pour autant, il est également possible de prévoir une ligne de commande individuelle pour chaque cellule, ce qui permet d'utiliser des commutateurs cellulaires tous identiques, mais ajoute nombre de lignes électriques au réseau.

Chaque commutateur cellulaire peut être totalement indépendant et commandé directement, par exemple par une unité centrale. Ceci peut, bien sûr, être obtenu de façon aisée si chaque unité dispose d'une ligne de commande propre. Il est aussi possible de prévoir que toutes les cellules utilisent la même ligne de commande sur laquelle le signal de commande est envoyé et auquel une ou plusieurs cellules vont répondre. Ceci peut être réalisé notamment par des signaux de commande constitués par des seuils de tension. Une autre version de cette seconde variante peut être l'utilisation de trains d'impulsions, ce qui permet une commande individuelle avec une ligne de commande unique.

L'association de cellules élémentaires telles que présentées à la figure 3 permet notamment de charger l'ensemble de Ucap bien au-delà de la tension susceptible d'être fournie par la batterie, qui plus est avec un chargement progressif des différentes unités, en reliant un module comportant n cellules ayant chacune une tension unitaire maximale Un,max inférieure à une source de tension U, et en opérant une série d'opération dé-commutant et re-commutant tour à tour une série de cellules unitaires de façon à incrémenter progressivement la charge de chacune des cellules unitaires, jusqu'à un niveau proche mais inférieur à sa tension unitaire maximale Un,max, la somme des tensions unitaires des unités de stockages pouvant devenir supérieure à la tension U.

Cette association permet de plus de fournir une tension régulée en plaçant en série j unités de stockage de sorte que la somme des tensions unitaires des unités de stockage est voisine de U, et en ajoutant une ou plusieurs unités de stockage mises en série au fur et à mesure que les unités de stockage se déchargent afin de maintenir une tension voisine de la tension de consigne U. De préférence, chaque ajout d'une ou plusieurs unités est précédé ou suivi par une phase d'isolation électrique et de mise en série de tout ou partie des n unités de stockage de manière à équilibrer la charge entre toute ou partie des n unités de stockage.

Pour plus de détail sur ce procédé de chargement et de déchargement, il est renvoyé à la demande de brevet français 0758973, déposée le 13 novembre 2007 au nom de la demanderesse.

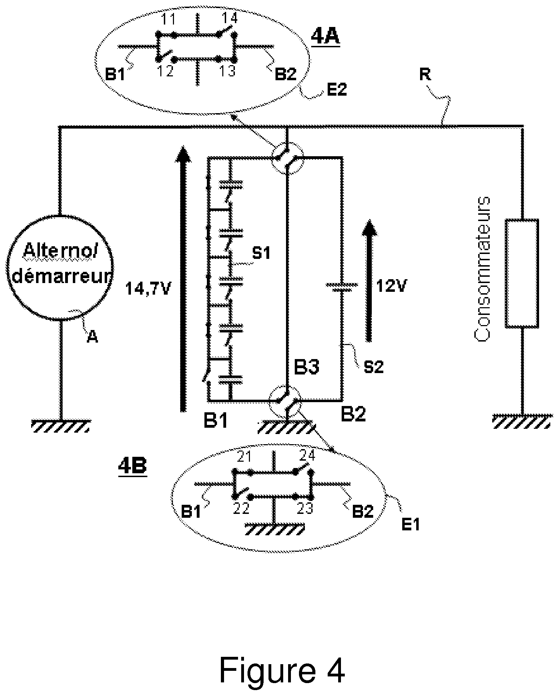

La figure 4 illustre une configuration mixte série/parallèle, qui ne fait pas partie de l'invention, dans laquelle la branche principale B1 et la branche-batterie B2 sont reliées d'une part au réseau de bord et d'autre part à une masse par deux ensembles de commutateurs E1 et E2, eux-mêmes associés par une branche de liaison B3. Les ensembles de commutateurs E1 et E2 permettent de connecter séparément ou ensemble chacune des branches B1 et B2 sur le réseau de bord R. De plus ces ensembles de commutateurs E1 et E2 permettent de mettre la batterie en série ou en parallèle du stockeur S1.

Un exemple possible de ces ensembles de commutateurs est montré figure 4A qui est un schéma de détail de l'ensemble de commutateurs E2 et figure 4B, de même un schéma de détail de l'ensemble de commutateurs E1.

Ces figures 4A et 4B montrent que chaque ensemble de commutateurs est ici en fait constitué par 4 commutateurs, 11, 12, 13 et 14 pour l'ensemble 10 et 21, 22, 23 et 24 pour l'ensemble 20.

Ainsi si les commutateurs (11 et 22) d'une part et (14 et 23) d'autre part sont seuls passants, on a une configuration analogue aux configurations précédentes en ce sens que les deux branches B1 et B2 sont connectées en parallèles sur le réseau de bord.

Si les commutateurs (13 et 14) et/ou (24 et 23) sont ouverts, la branche B2 n'est plus connectée au réseau de bord, ce qui revient donc à l'ouverture du commutateur C2 (C1 fermé). De même, si les commutateurs (11 et 12) et/ou (21 et 22) sont ouverts, on est dans une situation analogue à celle où le commutateur C1 ouvert.

Par ailleurs cette architecture permet également de placer la branche B2 en série de la branche B2 lorsque les seuls commutateurs (23, 13, 21, 11) sont passants.

La variante de réalisation proposée à la figure 4 permet en position parallèle de minimiser les courants dans les branches B1 et B2. Par contre, dans cette configuration, la tension fournie par ces deux branches doit rester compatible avec le réseau de bord, ce qui interdit d'alimenter notamment l'alterno-démarreur avec des tensions trop élevées.

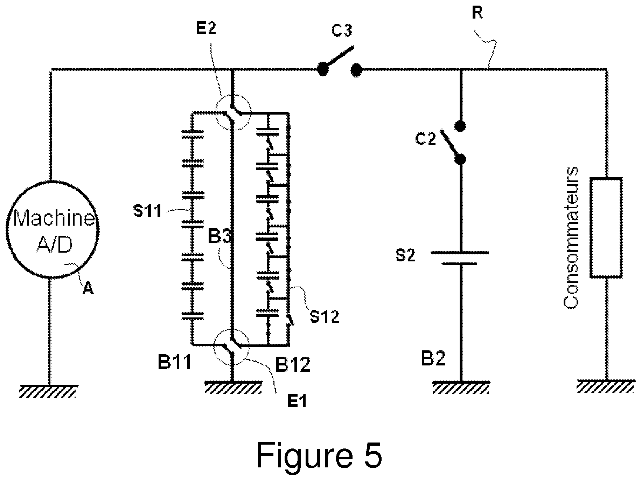

Cette limitation n'est plus présente dans la variante illustrée à la figure 5 (variante qui ne fait pas partie de l'invention) où la batterie est de nouveau sur une branche isolée B2, reliée au réseau de bord via le commutateur C2, la partie flottante ou régulée du réseau de bord portant le stockeur d'énergie apte à fournir une tension variable et la machine électrique pouvant être isolée par l'interrupteur C3. Dans cette architecture, structurellement proche de l'architecture présentée à la figure 2, la branche principale B12 porte le stockeur d'énergie S12 apte à fournir une tension variable (régulée) et une branche auxiliaire B11 porte un ensemble S11 de condensateurs montés en série, qui vont donc être également en mesure de fournir une tension variable (mais non régulée). Les deux branches B11 et B12 sont associées en parallèle ou en série par exemple par des ensembles de commutateurs E1 et E2 analogues à ceux illustrés figure 4.

Cette solution permet avec un surcoût minime de poursuivre l'augmentation de tension aux bornes de l'alterno-démarreur, tout en conservant une tension du réseau de bord essentielle constante comme requise par les consommateurs.

Il est aussi possible de ne prévoir un tel ensemble de commutateur qu'en tête (E2), la batterie étant alors directement reliée à la masse, et l'ensemble de commutateur E1 étant simplifié et pouvant par exemple être constitué par un simple jeu de trois commutateurs pour associés la masse aux branches B1 et B3.

La variante illustrée à la figure 5 prend tout son sens si le nombre de cellules élémentaires associées pour former le stockeur d'énergie S12 est grand.

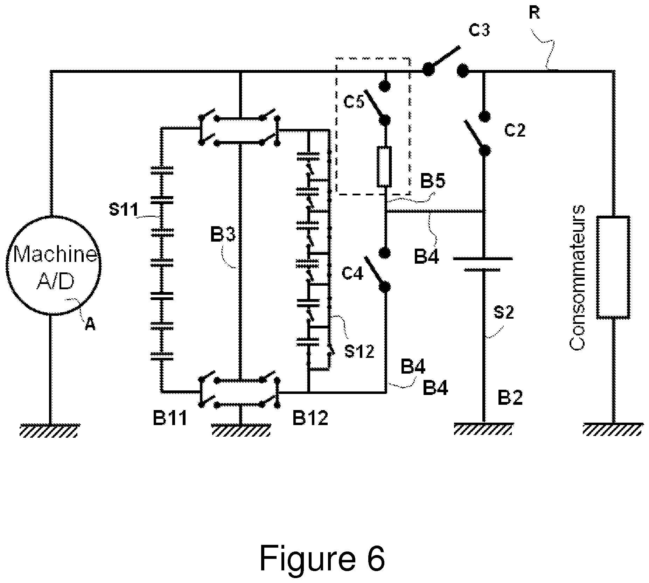

L'architecture présentée à la figure 5 peut encore être perfectionnée comme illustré figure 6. Une première amélioration consiste dans l'addition de moyens permettant de placer la batterie S2 en série avec au moins l'une des branches principale ou auxiliaire, ceci grâce à la branche secondaire B4 munie d'un commutateur-batterie secondaire C4. Cette architecture (qui ne fait pas partie de l'invention) permet de mettre en évidence le caractère auxiliaire de la batterie, l'invention permettant de réaliser un circuit capable de fournir une tension régulée fixe pour les consommateurs sans pour autant disposer d'une source de tension fixe. A noter, qu'il est également possible d'opérer sans batterie avec d'autres configurations parallèles simples du type de celles représentées à la figure 2.

Par ailleurs sur cette figure 6 on a également prévu un moyen de précharge des condensateurs/supercondensateurs nécessaire en cas de décharge au dessous d'une tension mini des stockeurs S11 et/ou S12. Ce moyen de précharge peut être constitué par une résistance ou en ensemble constitué par une inductance et une diode

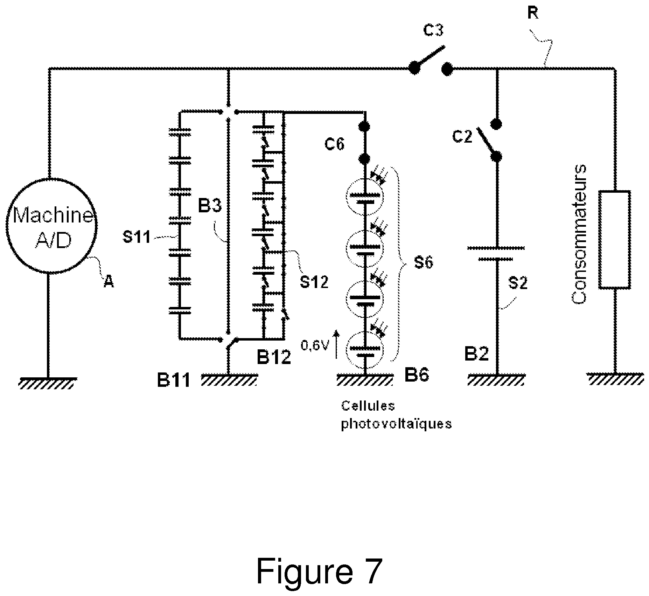

La figure 7 est une autre variante de la figure 5 qui ne fait pas partie de l'invention et qui illustre la possibilité de connecter une autre source de tension aux bornes de la branche commutée B12. Cette solution très simple permet de connecter, par exemple un ensemble S6 de cellules photovoltaïques, associées au moyen d'un commutateur complémentaire C6 en utilisant toujours le même principe de commutation correspondant à mettre en série un nombre d'Ucap dépendant de la tension des cellules photovoltaïques et de la charge des Ucap puis, toujours par commutation, de charger chaque cellule ou d'équilibrer la tension entre les différentes branches et cellules. Dans l'exemple de la figure 7, on peut envisager de charger les Ucap des branches B11 et B12 à 31,2V avec 4 cellules de 0,6V, ceci sans DC/DC et éventuellement véhicule au parking. Cette solution est un moyen efficace pour combattre la décharge naturelle des Ucap en stockage longue durée, assurant ainsi un redémarrage du véhicule, même en cas de défaillance de la batterie.

Il faut bien souligner que toutes les architectures proposées permettent bien d'opérer avec des moyens de stockage d'énergie capables de fournir des tensions différentes et ceci sans que le circuit ne comporte de convertisseur DC/DC.

Sur le même principe, il est bien sûr possible d'envisager d'augmenter encore le nombre de branches, ou de cellules par branche, de manière à obtenir des tensions supérieures.

Dans toutes les architectures qui ont été présentées ci-dessus, il est prévu au plus une branche correspondant à un type donné d'éléments de stockage donnés, à l'exemple de la branche-batterie, de la branche principale portant les éléments commutables, de la branche auxiliaire ou de la branche portant des cellules voltaïques. Bien évidemment, il est possible d'associer une pluralité de branches d'un même type, montées en parallèle les unes aux autres. L'homme de l'art comprend également que le nombre de moyens de stockage portés par une branche donnée est essentiellement fonction de l'application envisagée et de la capacité de stockage électrique de ces moyens, en notant toutefois que l'emploi d'un grand nombre de moyens de stockage commutables, chacun d'une tension unitaire faible, permet une régulation plus précise.

Une autre possibilité tout particulièrement avantageuse pour des raisons de simplicité consiste à combiner les modes de réalisation des figures 1 et 3, c'est-à-dire en équipant une ou plusieurs des lignes parallèles avec une série d'unités de stockage électriques comportant des ensembles de cellules commutées, autrement dit le moyen de stockage électrique commutable est alors lui-même formé de sous-ensembles de moyens de stockage électrique commutables.

## Revendications

1. Circuit électrique comportant
- un réseau de bord (R), alimentant des organes consommateurs,
- un moyen générateur d'énergie électrique (A) relié au réseau de bord,
- et au moins un moyen de stockage électrique commutable (S1, S12) pour stocker de l'énergie du générateur, le moyen de stockage comportant des éléments de stockage aptes à fournir une tension variable, lesdits éléments de stockage étant capables d'être commutés successivement de sorte que le moyen de stockage électrique commutable (S1, S12) peut fournir une tension régulée au réseau de bord (R),
**caractérisé en ce que** les éléments de stockage du moyen de stockage électrique commutable (S1) comportent une série de n éléments de stockage électrique montés sur des lignes électriques connectées en parallèles entre elles (L11, L12, ... L1n) et comportant chacune un commutateur de ligne (C11, C12, ...C1n), lesdites n lignes (L11, L12, ...L1n) électriques connectées en parallèle étant reliées et mise en commun pour être reliées en série à un moyen de stockage apte à fournir une tension fixe (S2) et relié au réseau de bord (R).

2. Circuit électrique selon la revendication 1, **caractérisé en ce que** le moyen de stockage apte à fournir une tension fixe (S2) est une batterie et **en ce qu'**il comporte de plus une branche de raccordement de la batterie (B2') munie d'un commutateur de raccordement de la batterie (C2) pour alimenter le réseau de bord uniquement par le moyen de stockage apte à fournir une tension fixe (S2).

3. Circuit électrique selon la revendication 1 ou la revendication 2, **caractérisé en ce qu'**il comporte de plus un interrupteur (C3) permettant d'isoler du reste du circuit l'ensemble constitué par les consommateurs du réseau de bord, le moyen de stockage apte à fournir une tension fixe (S2) et éventuellement, la branche de raccordement de la batterie (B2').

4. Circuit électrique selon l'une quelconque des revendications précédentes, **caractérisé en ce que** ledit moyen de stockage électrique commutable (S1) comporte un ensemble de cellules commutées obtenu par la mise en série et/ou en parallèle des lignes de puissance d'au moins deux cellules élémentaires, chaque cellule élémentaire comportant
• une ligne de puissance reliant deux bornes de connexion ;
• une unité de stockage électrique, reliée aux bornes de la ligne de puissance par l'intermédiaire d'au moins un commutateur cellulaire pour placer l'unité de stockage en série (S) ou déconnectée (BP) de la ligne de puissance et ;
• une ligne de commande pour commander le ou les commutateurs cellulaires.

5. Circuit électrique selon l'une quelconque des revendications précédentes, **caractérisé en ce que** le moyen de stockage électrique apte à fournir une tension variable comporte au moins un condensateur ou au moins un supercondensateur ou une pluralité de condensateurs/supercondensateurs montés en série.

6. Circuit électrique selon l'une quelconque des revendications précédentes dans lequel le réseau de bord est un réseau d'un véhicule automobile.

7. Circuit électrique selon l'une quelconque des revendications 1 à 6 dans lequel le réseau de bord est un réseau d'un véhicule automobile équipé d'une fonction stop-and-start.

## Patentansprüche

1. Elektrische Schaltung bestehend aus
- ein Bordnetz (R), das Verbraucherverbände versorgt,
- eine elektrische Energieerzeugungseinrichtung (A), die an das Bordnetz angeschlossen ist,
- Und mindestens ein schaltbares elektrisches Speichermittel (S1, S12) zum Speichern von Generatorenergie, wobei das Speichermittel Speicherelemente umfasst, die eine variable Spannung liefern können, wobei die Speicherelemente geschaltet werden können nacheinander, so dass das schaltbare elektrische Speichermittel (S1, S12) eine geregelte Spannung an das Bordnetz (R) liefern kann,
**dadurch gekennzeichnet, dass** die Speicherelemente der schaltbaren elektrischen Speichermittel (S1) eine Reihe von n elektrischen Speicherelementen umfassen, die auf parallel miteinander verbundenen elektrischen Leitungen (L11, L12, ... L1n) montiert sind und jeweils einen Schalter für umfassen Leitung (C11, C12,... C1n), wobei n parallel geschaltete elektrische Leitungen (L11, L12,... L1n) verbunden und zusammengefasst werden, um in Reihe mit einem Speichermittel geschaltet zu werden, das eine feste Spannung liefern kann (S2) und mit dem Bordnetz (R) verbunden.

2. Elektrische Schaltung nach Anspruch 1, **dadurch gekennzeichnet, dass** das Speichermittel, das eine feste Spannung (S2) liefern kann, eine Batterie ist und dass es ferner einen Zweig zum Verbinden der mitgelieferten Batterie (B2') umfasst einen Batterieanschlussschalter (C2) zur Versorgung des Bordnetzes nur über die Speichermittel, die eine feste Spannung liefern können (S2).

3. Elektrische Schaltung nach Anspruch 1 oder Anspruch 2, **dadurch gekennzeichnet, dass** er ferner einen Schalter (C3) umfasst, der es ermöglicht, die von den Verbrauchern des Bordnetzes gebildete Baugruppe vom geeigneten Stromkreis, dem geeigneten Speichermittel, zu isolieren um eine feste Spannung (S2) und möglicherweise den Anschlusszweig der Batterie (B2 ') zu liefern.

4. Elektrische Schaltung nach einem der vorhergehenden Ansprüche, **dadurch gekennzeichnet, dass** das schaltbare elektrische Speichermittel (S1) einen Satz geschalteter Zellen umfasst, die durch Anordnen von Stromleitungen von mindestens zwei in Reihe und / oder parallel erhalten werden Elementarzellen, wobei jede Elementarzelle umfasst
• eine Stromleitung, die zwei Anschlussklemmen verbindet;
• eine elektrische Speichereinheit, die über mindestens einen Mobilfunkschalter mit den Anschlüssen der Stromleitung verbunden ist, um die Speichereinheit in Reihe (S) zu schalten oder von der Stromleitung zu trennen (BP) und;
• eine Befehlszeile zur Steuerung der Mobilfunkschalter.

5. Elektrische Schaltung nach einem der vorhergehenden Ansprüche, **dadurch gekennzeichnet, dass** das elektrische Speichermittel, das eine variable Spannung liefern kann, mindestens einen Kondensator oder mindestens einen Superkondensator oder mehrere in Reihe geschaltete Kondensatoren / Superkondensatoren umfasst.

6. Elektrische Schaltung nach einem der vorhergehenden Ansprüche, bei der das Bordnetz ein Netz eines Kraftfahrzeugs ist.

7. Elektrischer Schaltung nach einem der Ansprüche 1 bis 6, bei dem das Bordnetz ein Netz eines Kraftfahrzeugs ist, das mit einer Stopp-und-Start-Funktion ausgestattet ist.

## Claims

1. Electrical circuit comprising
- an on-board network (R), supplying consumer bodies,
- an electrical energy generating means (A) connected to the on-board network,
- And at least one switchable electrical storage means (S1, S12) for storing generator energy, the storage means comprising storage elements capable of supplying a variable voltage, said storage elements being capable of being switched successively so that the switchable electrical storage means (S1, S12) can supply a regulated voltage to the on-board network (R),
**characterized in that** the storage elements of the switchable electrical storage means (S1) comprise a series of n electrical storage elements mounted on electrical lines connected in parallel to each other (L11, L12, ... L1n) and each comprising a switch for line (C11, C12,... C1n), said n electric lines (L11, L12,... L1n) connected in parallel being connected and pooled to be connected in series to a storage means capable of supplying a fixed voltage (S2) and connected to the on-board network (R).

2. Electric circuit according to claim 1, **characterized in that** the storage means capable of supplying a fixed voltage (S2) is a battery and **in that** it further comprises a branch for connecting the battery (B2 ') provided with a battery connection switch (C2) for supplying the on-board network only by the storage means capable of supplying a fixed voltage (S2).

3. Electric circuit according to claim 1 or claim 2, **characterized in that** it further comprises a switch (C3) making it possible to isolate from the rest of the circuit the assembly constituted by the consumers of the on-board network, the suitable storage means to supply a fixed voltage (S2) and possibly, the connection branch of the battery (B2 ').

4. Electrical circuit according to any one of the preceding claims, **characterized in that** said switchable electrical storage means (S1) comprises a set of switched cells obtained by placing power lines of at least two in series and / or in parallel elementary cells, each elementary cell comprising
• a power line connecting two connection terminals;
• an electrical storage unit, connected to the terminals of the power line by means of at least one cellular switch to place the storage unit in series (S) or disconnected (BP) from the power line and;
• a command line to control the cellular switch (s).

5. Electrical circuit according to any one of the preceding claims, **characterized in that** the electrical storage means capable of supplying a variable voltage comprises at least one capacitor or at least one supercapacitor or a plurality of capacitors / supercapacitors connected in series.

6. Electrical circuit according to any one of the preceding claims, in which the on-board network is a network of a motor vehicle.

7. Electrical circuit according to any one of Claims 1 to 6, in which the on-board network is a network of a motor vehicle equipped with a stop-and-start function.
